Europäisches Patentamt

European Patent Office

Office européen des brevets

(19)

(11) Publication number: 0 388 195
A1

(12) **EUROPEAN PATENT APPLICATION**

(21) Application number: 90302770.4

(22) Date of filing: 15.03.90

(51) Int. Cl.⁵: **E03F 5/22, F04B 21/04, F16J 15/56**

(30) Priority: 15.03.89 US 323956

(43) Date of publication of application:
19.09.90 Bulletin 90/38

(84) Designated Contracting States:
CH DE FR GB LI

(71) Applicant: **Williams, Richard Lee**
**9180 Parker Road**
**Harrod Ohio 45850(US)**

(72) Inventor: **Williams, Richard Lee**
**9180 Parker Road**
**Harrod Ohio 45850(US)**

(74) Representative: **Jackson, Peter Arthur et al**
**Gill Jennings & Every 53-64 Chancery Lane**
**GB-London WC2A 1HN(GB)**

(54) **Pressure sewer system.**

(57) A sewage pumping system for use in residential sewer systems. The pumping system includes a sump (14), an intake conduit (42), a discharge conduit (44), and a pump (18) for pumping sewage from the sump through the intake and discharge conduits (42,44). The pump (18) is a piston type pump with rolling resilient O-rings (24) received between the piston (22) and the cylinder (20). A pair of check valves (48a,48b) is provided, one in the intake conduit (42) and the other in the discharge conduit (44) to ensure that the flow through the conduits is unidirectional.

FIG 1

## PRESSURE SEWER SYSTEM

This invention relates to residential sewage pumping systems for use in discharging sewage from a source of origin, such as a residence, into a sewer main.

In urban environments, residential sewage is generally discharged from a residence through a gravity fed system into a sewer main. Thus the slope of the system conduits is continuously downward from the residence to the sewer main. Such systems are not only expensive to install but are sometimes impossible to install in hilly terrain without the use of lift pumps to lift the sewage from one point in the system to another.

Other residential sewage systems, most commonly those used in suburban or rural environments, use septic systems. Such residential sewage systems include a septic tank and a dry well or drain field for disposing of the excess waste water. Such systems cannot be used in all locations due to rocky soil, heavy non-absorbent soil, or due to environmental considerations.

Still other residential installations have used pressure sewer systems. Pressure sewer systems discharge the sewage from a residence and the like by means of a pump to a common force main or to a gravity main located in the street. Such pressure sewer systems have commonly used effluent pumps or grinder pumps, both of which use an impeller with a plurality of vanes to transport the sewage under pressure from an inlet conduit to an outlet conduit. Grinder pumps differ from effluent pumps in that they additionally have a cutting element to grind or comminute the sewage prior to pumping the sewage. Grinder pumps have not been satisfactory since they require extremely high maintenance, especially with regard to the cutting elements. Furthermore, the cutting elements tend to clog if the sewage contains cigarette filters, plastic straws or other plastic non-soluble items such as panty hose or infant disposable diaper moisture barriers.

Another problem with such systems is that vane type pumps are limited in the amount of lift which they can provide. Commonly, such systems are limited to providing to forty (40) feet of lift. If it is attempted to increase the lift generated by such vane type pumps, the seals of the pumps tend to fail due to excessive pressure generated in the pumps, thereby resulting in expensive repairs. Even without excessive pressures in the system, another problem with such pressure type sewer systems has been that pump maintenance has been relatively expensive. The seals of the system tend to wear out after a period of use and replacement of the seals requires disassembly of the pumps.

It is therefore desired to provide a residential pressure type sewer system which is relatively inexpensive to maintain, which provides a substantial amount of lift, and wherein the pump is inexpensive to maintain and not subject to failure. Furthermore, it is desired to provide such a system wherein the size of the solids which can be handled by the system is substantially greater than in the prior art systems.

The present invention provides a residential sewage pumping system which overcomes the disadvantages of the above described prior art sewage systems by providing an improved pressure sewer system therefor.

The pressure sewer system according to the present invention, in one form thereof, provides a sewer system including a piston pump having an inlet and an outlet, an intake conduit connecting the inlet to a sump, a discharge conduit connecting the outlet to a sewer main and a pair of check valves respectively connected in the intake and discharge conduits.

The present invention further provides a pressure sewer system including a piston pump having a cylinder and piston with a rolling resilient ring seal disposed between the cylinder wall and the piston so that, as the piston travels in the cylinder, the ring rotates and rolls between the cylinder wall and the piston to provide a seal therebetween. The cylinder has an inlet to which an intake conduit is connected. The cylinder also has an outlet to which a discharge conduit is connected. The intake conduit is connected to a sump in which sewage is collected. A check valve is provided in both the intake conduit and in the discharge conduit.

An advantage of the present invention is that the system can handle much larger solids than was possible with prior art systems.

Another advantage of the present invention is that the pump does not include cutting elements which are subject to failure and requires high maintenance.

A still further advantage of the present invention is that the system generates substantially more head or pressure than prior art grinder pump systems so that the system may be used in a great many more applications than was possible for prior art pressure sewer systems. Thus, for instance, if a number of residences with pressure sewer systems according to the present invention are connected to a single force main, it would not generally be necessary to include a further central pumping station.

Yet a further advantage of the present invention is that, if excess pressure should develop in the pump, the pressure is simply relieved by discharge past the rolling seal, which does not impair the seal or damage the pump in any manner.

Still another advantage of the present invention is that the piston pump is very simple to repair if new seals should be required. The pump also has a very long life and does not need any special lubrication.

The present invention, in one form thereof, comprises a sewage pumping system having a collection sump and a piston pump which includes an inlet and an outlet. An intake conduit connects the sump to the pump inlet. A discharge conduit is connected to the pump outlet. A valve is provided in both the intake and the discharge conduits for insuring unidirectional flow through the intake discharge conduits.

The present invention, in one form thereof, comprises a sewage pumping system including a piston pump wherein the pump includes a cylinder having an inlet and an outlet, a piston is reciprocably disposed in the cylinder and a resilient ring is rotatably received between the piston and the cylinder. An intake conduit is connected to the inlet and a discharge conduit is connected to the outlet. A pair of check valves are respectively located in the intake and discharge conduits.

The present invention, in one form thereof, comprises a collection sump, a piston including a cylinder with an inlet and an outlet. A piston is reciprocally disposed the cylinder and a resilient ring is rotatably disposed between the cylinder wall and the piston. An intake conduit connects the inlet to the sump and a discharge conduit is connected to the outlet. Check valves are respectively located in both the intake and discharge conduits.

An object of the present invention is to provide a pressure sewer system including a piston pump.

Another object of the present invention to provide a pressure sewer system which can provide greater discharge pressure than was possible with prior art pressure sewer systems.

Still another object of the present invention to provide a pressure sewer system wherein the pump does not need to include a comminuting or cutting element.

Yet a further object of the present invention is to provide a pressure sewer system wherein the pump is easy to repair.

The above mentioned and other features and objects of this invention, and the manner of attaining them, will become more apparent and the invention will be better understood by reference to the following description of an embodiment of the invention taken in conjunction with the accompanying drawings wherein:

Fig. 1 is an elevational view, partially in cross section, of a pressure sewer system according to the present invention;

Fig. 2 is an elevational view, partially in cross section, of another embodiment of a pressure sewer system according to the present invention;

Fig. 3 is an enlarged elevational view, partially in cross section, of the pump and check valve arrangement of the embodiment of Fig. 2;

Fig. 4 is a cross sectional view taken along line 4-4 of Fig. 3;

Fig. 5 is a cross sectional view of a check valve of the system of Fig. 2 taken along line 5-5 of Fig. 4;

Fig. 6 is a cross sectional view of the check valve of Fig. 5 taken along line 6-6 thereof;

Fig. 7 is a cross sectional view of the piston pump of the system of Figs. 1 and 2.

Corresponding reference characters indicate corresponding parts throughout the several views of the drawings.

The exemplifications set out herein illustrate a preferred embodiment of the invention, in one form thereof, and such exemplifications are not to be construed as limiting the scope of the disclosure or the scope of the invention in any manner.

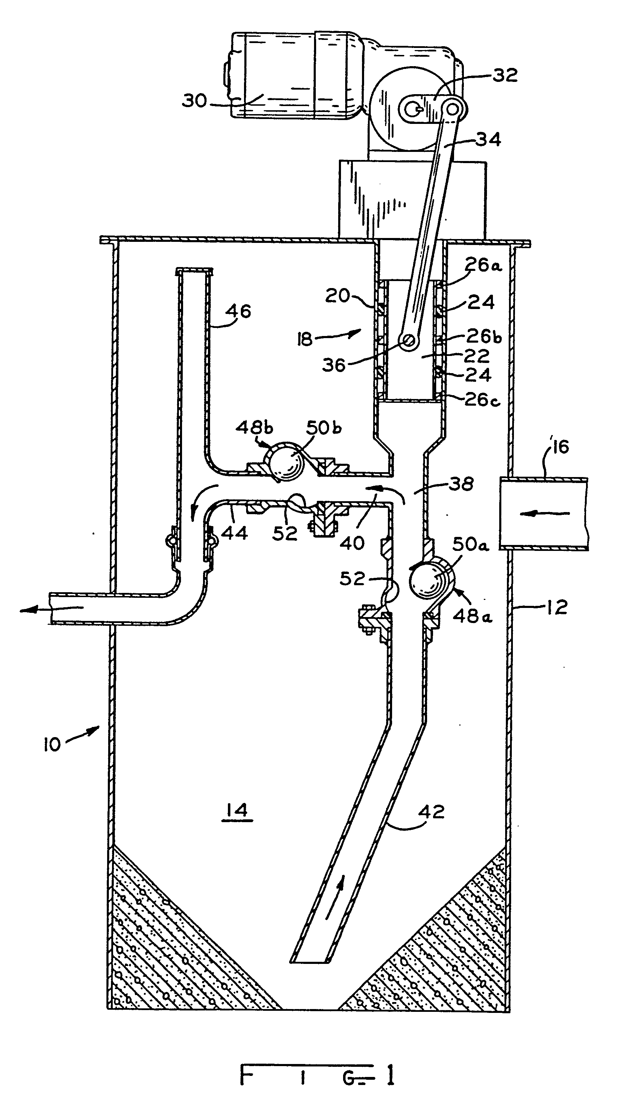

Referring to Fig. 1 there is shown a first embodiment of the pressure sewer system according to the present invention. The system 10 includes a housing 12 which may be constructed of either metal, concrete or other suitable material. The housing includes a sump 14 and an inlet 16 which is connected to the sewer outlet of a residence or the like (not shown). The housing 12 may, for example, be two foot square and five feet deep and is generally buried in the soil. Pump 18 is disposed in housing 12. The pump is a piston type of pump including a cylinder 20 and a piston 22. Between the piston and the wall of cylinder 20, two O-rings 24 are provided. O-rings 24 are rotatable so that they will roll as the piston 22 travels in cylinder 20 as further explained hereinafter. O-rings 24 are captured between shoulders 26a, 26b, and 26c.

Piston 22 is driven by a source of driving power herein shown as an electric motor 30. The piston may also be driven by an internal combustion engine or the like. Motor 30 drives a crank 32 which in turn is connected to piston 22 by means of a connecting rod 34 and a wrist pin 36. Pump 18 pumps sewage out of sump 14 through intake conduit 42 and pump inlet 38. The sewage is then pumped through pump outlet 40 and discharge conduit 44 to a sewer force main or to a gravity sewer main.

It should be noted that the pressure sewer system according to the present invention may be used to discharge into either a gravity fed sewer system or a pressure system. It should also be noted that a plurality of pressure sewer systems according to the present invention may be connected in parallel to discharge into a sewer main.

An air cushion chamber 46 is provided on the discharge side of the pump to accommodate variations in pressure. Check valves 48a and 48b are provided respectively on the inlet and outlet sides of pump 18. Check valves 48, in this embodiment, are shown including a ball 50 which is adapted for seating on check valve seat 52 when no flow occurs through check valve 48. As can be seen by the arrows, as the pump piston 22 moves upwardly on its intake stroke, a vacuum is created at pump inlet 38. The vacuum will cause ball 50b to seat on check valve seat 52b thereby closing valve 48b. At the same time ball 50a will be caused to move away from seat 52a so that check valve 48a is open. On the down stroke of piston 22, the piston will pressurize pump inlet 38 to close check valve 48a by seating ball 50a on seat 52a. At the same time, the pressure at pump outlet 40 will force ball 50b away from seat 52b to open check valve 48b. Thus, sewage drawn up through intake conduit 42 on the intake stroke of pump 18 will be forced out of discharge conduit 44 and into a sewer force main (not shown).

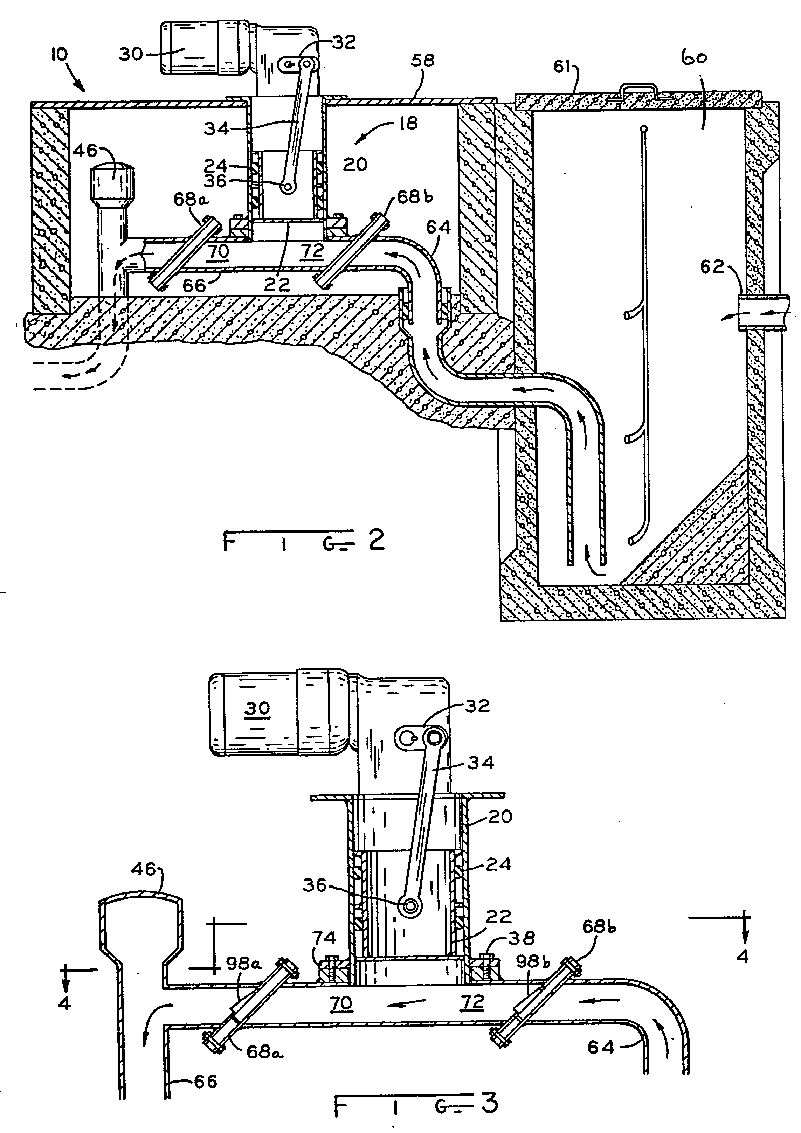

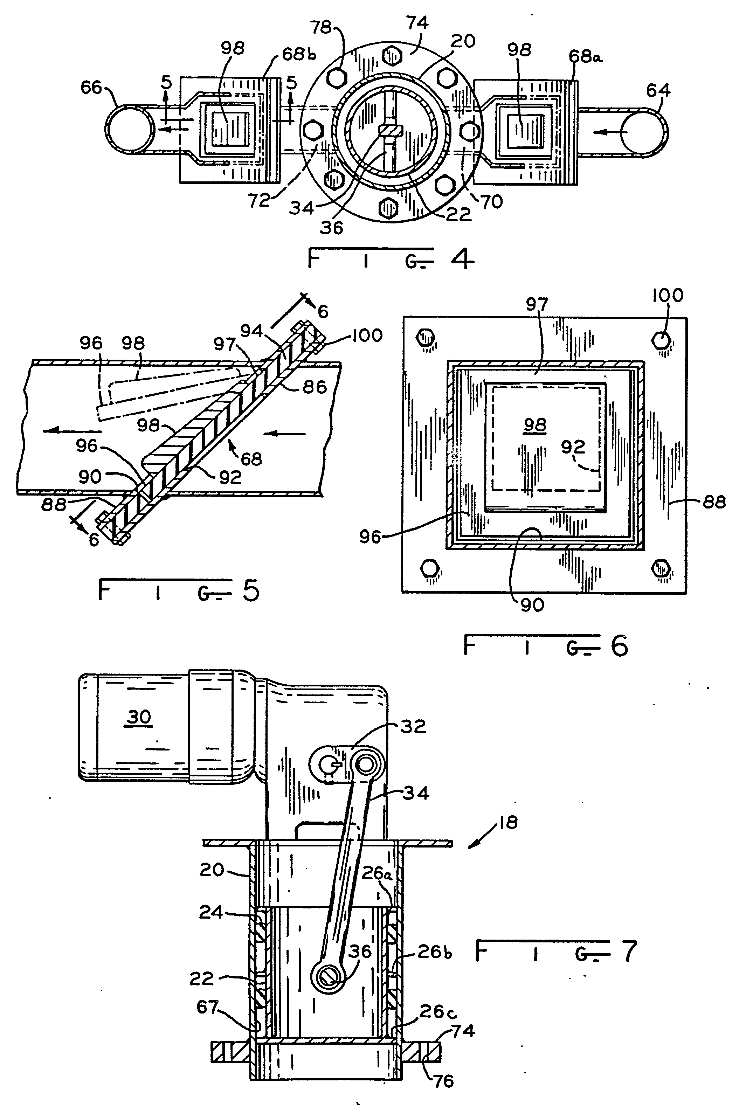

Referring now to Figs. 2, 3 and 4, a second embodiment of a pressure sewer system 10 is shown. A housing 58 is provided including a sump 60. Sump 60 includes a lid 61 to provide access to the sump. An inlet conduit 64 is provided to deliver sewage from sump 60 to pump 18. A discharge conduit 66 is provided to deliver sewage from pump 18 to a sewer main (not shown). Operation of pump 18 is similar to that of the embodiment of Fig. 1.

As best seen in Fig. 7, O-rings 24 of pump 18 are compressed to provide a proper seal between piston 22 and cylinder 20. Each of O-rings 24 rotates in a rolling movement in a chamber 67 as piston 22 reciprocates in cylinder 20. By compressing O-rings 24 approximately 25%, sufficient head will be generated by the pump for proper operation of the system. If desired, the compression of O-rings 24 may be increased to provide for production of greater head. O-rings 24 may be constructed of a resilient flexible material such as, for instance, neoprene rubber. Since O-rings 24 roll during travel of piston 22, wear on the O-rings is much less than if the O-rings were subject to only sliding friction. If the O-rings should wear out, replacement is relatively simple. Piston 22 merely needs to be moved upwardly out of cylinder 20 and new O-rings 24 installed on the piston.

It should also be noted that pump 18 does not need to be lubricated with lubricating oil as the moisture in the sewage will provide sufficient lubrication for the O-ring seals. If pressure in the system is excessive, pressure is relieved simply by blow-by of the O-ring seals. This does not damage the pump. Accordingly, maintenance for the pump is extremely low and the life of the pump is very long.

Pump 18 includes an inlet 72 and an outlet 70. Pump 18 is secured to the intake and discharge conduits 64 and 66 by means of a flange 74 which includes apertures 76 for receiving bolts 78 as best seen in Fig. 4.

The embodiment of the pressure sewer system 10 of Figs. 2 - 4 includes a different check valve than the embodiment of Fig. 1. Check valves 68a and 68b are best illustrated in Figs. 5 and 6. The check valves includes a pair of rigid plates 86 and 88. Plate 86 includes a cut-out or aperture 92 and plate 88 includes a cut-out or aperture 90. Cut-out 90 is larger than cut-out 92. A sheet of resilient material 94 such as belting or neoprene rubber is captured between plates 86 and 88. Sheet 94 includes three cuts to provide a flap 96 which is hingedly secured at only one edge 97. Flap 96 is smaller than aperture 90 but larger than aperture 92. Flap 96 is provided with a weight 98. As can be best seen in Fig. 5, flap 96 can be forced open by pressure so that flap 96 passes through aperture 90, against the force of gravity provided by the weight of weight 98 and the natural resilience of the resilient material. On the other hand, if pressure on flap 96 is exerted from the left hand side thereof as seen in Fig. 5, flap 96 is forced shut against opening 92. Check valves 68a and 68b are so arranged that they open in the proper direction for proper unidirectional flow of sewage through the system. The embodiment of Figs. 2 - 6 operates similarly to the embodiment of Fig. 1.

While this invention has been described as having a preferred design, it will be understood that it is capable of further modification. This application is therefore intended to cover any variations, uses, or adaptations of the invention following the general principles thereof and including such departures from the present disclosure as come within known or customary practice in the art to which this invention pertains and fall within the limits of the appended claims.

**Claims**

1. A sewage pumping system comprising: a collection sump (14); a piston pump (18) having a housing including an inlet (38), an outlet (40), a cylinder (20), a piston (22) including a pair of circumferential shoulders (26a,26b) movably disposed in said cylinder, a resilient ring means (24) located between said shoulders and disposed in said cylinder (20), said resilient ring means (24) being in sealing rolling engagement with said cylinder (20) and said piston (22) when said piston (22) moves in said cylinder (20); an intake conduit (42) connecting said sump (14) to said pump inlet (38); a discharge conduit (44) connected to said pump outlet (40); and valve means (48a,48b) in said intake and discharge conduits (42,44) for ensuring unidirectional flow through said intake and discharge conduits (42,44).

2. The system according to claim 1 wherein said ring means (24) comprises a resilient ring which is compressed in the range of 20% to 30%.

3. The system according to claim 1 wherein said ring means (24) comprises a neoprene rubber ring.

4. The system according to claim 1 wherein said ring means comprises two spaced apart rings (24).

5. The system according to claim 1 wherein said valve means comprises a pair of check valves (48a,48b) respectively located in said intake and discharge conduits (42,44).

FIG. 1

FIG 2

FIG 3

F I G — 4

F I G — 5

F I G — 6

F I G — 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4614480 (HARDISON)<br>* column 4, line 40 - column 5, line 36; figures 1, 5 *<br>--- | 1-5 | E03F5/22<br>F04B21/04<br>F16J15/56 |
| Y | DE-A-3511932 (DRÄGERWERK AG.)<br>* page 4, line 24 - page 5, line 12; figure *<br>--- | 1-5 | |
| Y | US-A-1739838 (JOHNSON)<br>* the whole document * | 5 | |
| A | | 1 | |
| | --- | | |
| A | US-A-2317034 (DALKIN)<br>------ | | |
| | | | TECHNICAL FIELDS SEARCHED (Int. Cl.5)<br><br>E03F<br>F04B<br>F16J |

The present search report has been drawn up for all claims

| Place of search | Date of completion of the search | Examiner |
|---|---|---|
| THE HAGUE | 29 JUNE 1990 | BIRD C.J. |

EPO FORM 1503 03.82 (P0401)